# EUROPEAN PATENT APPLICATION

(11) **EP 3 964 992 A1**
(43) Date of publication of application: **09.03.2022**
(21) Application number: 20195088.8
(22) Date of filing: 08.09.2020
(51) Int. Cl.: G06F 21/62, G06F 11/00, G06F 11/07, G06F 21/60, H04L 9/32

(54) **PROTECTION OF CONFIDENTIAL DATA FOR SYSTEM ENGINEERING WITH CRYPTOGRAPHIC METHOD**

(71) Applicant: Siemens Aktiengesellschaft, 80333 München (DE)
(72) Inventor: Kaukewitsch, Christof, 81479 München (DE); Zeller, Marc, 81243 München (DE)

(57) **Abstract**

The invention provides a computer-implemented method for protecting confidential data in a verification of a system comprising at least the steps of:
generating a virtual model for at least one of multiple sub-systems included in the system to verify an operation of the system;
acquiring a policy for disclosure of data related to the verification, wherein the policy defines a range of data for the at least one subsystem to be disclosed to at least one user associated with the verification;
configuring result data of the verification for the at least one sub-system based on the defined range of data; and
adjusting the virtual model in accordance with the policy to only disclose the configured result data in an cryptographic environment during the verification.

## Description

### Field of the Invention

The present invention relates to protecting confidential data during a verification of the system even for parties associated with the verification.

### Background of the Invention

Systems engineering projects typically comprise the combination and integration of components or sub systems to an overall system. The cooperating parties may have the wish not do disclose the inner structure, functionality or failure properties of their components or sub systems to others involved in the project for various important reasons, e.g. in order e.g. to protect their intellectual property or not to disclose their supply chain partners to competitors etc.

Despite the wish for confidentiality the requested fulfillment of functional requirements needs to be verified, e.g. by means of simulations. This however is only possible if model data of the interior structure and functional properties of the system, its components or sub systems is granted.

Despite the wish for confidentiality the requested fulfillment of non-functional requirements such as RAMS (Reliability, Availability, Maintainability, and Safety) targets may enforce quantitative RAMS analyses of the systems engineered. This may comprise the conduction of for instance Fault Tree Analyses (FTA) or Failure Modes and Effects Analyses (FMEA). These analyses typically require access to the interior structure and corresponding failure properties of the system and hence to its sub systems or components.

The problem has been approached by involving a trustworthy independent third party and/or by implementing legally binding agreements such as Non-Disclosure-Agreements (NDA). Even with these measures a certain risk remains regarding lack of confidentiality and conscious or subconscious knowledge leak since human participants are involved.

Another solution or approach has been to obfuscate or hide the sub-system's or component's interior by anonymization, simplification or abstraction of the underlying structure or model. Anonymization or even simplification however might prove insufficient if experts e.g. from competitor's side are involved who may be able to derive relevant conclusions even with minimal input data given. Moreover model simplification bears the risk that e.g. RAMS analyses indicate non-compliance with quantitative targets while these actually would be achieved if the original complete model had been used for evaluation. This all leads to significant additional and unnecessary efforts, time delay or even project loss. In some cases it may eventually result in disclosing confidential sub system or component data to external parties in order to win a project award.

### Summary of the Invention

Accordingly, it is one of the objectives of the present invention to provide a method and system for protecting confidential data for system engineering with cryptographic methods.

Accordingly, computer-implemented method for protecting confidential data in a verification of a system comprising at least the steps of:
generating a virtual model for at least one of multiple sub-systems included in the system to verify an operation of the system;
acquiring a policy for disclosure of data related to the verification, wherein the policy defines a range of data for the at least one subsystem to be disclosed to at least one user associated with the verification;
configuring result data of the verification for the at least one sub-system based on the defined range of data; and
adjusting the virtual model in accordance with the policy to only disclose the configured result data in an cryptographic environment during the verification.

In some advantageous embodiments, variants, or refinements of embodiments, the policy includes an identification of at least one user authorized for access to the defined range of data.

In some advantageous embodiments, variants, or refinements of embodiments, the result data is configured differently per user associated with the verification.

In some advantageous embodiments, variants, or refinements of embodiments, the result data is disclosed to at least one authorized user with a presence of at least one of a public key and a private key.

In some advantageous embodiments, variants, or refinements of embodiments, the virtual model is encrypted based on a smart contract by using a blockchain technology.

In some advantageous embodiments, variants, or refinements of embodiments, the encrypted condition conceals at least one of an inner structure, a functionality, and a failure property of the at least one sub-system.

In some advantageous embodiments, variants, or refinements of embodiments, the verification is to determine whether fulfillment of functional requirements and/or non-functional requirements of the at least one sub-system is reached for the operation of the system.

In some advantageous embodiments, variants, or refinements of embodiments, the result data of the verification indicates whether a target requirement is met or not.

In some advantageous embodiments, variants, or refinements of embodiments, the policy defines whether the range of data includes information about a failure property of the at least one sub-system for the non-functional requirements.

In some advantageous embodiments, variants, or refinements of embodiments, the at least one sub-system is connected to another sub-system comprising the system via at least one input and/or at least one output, and the operation of the system is performed based on interactions between the at least one sub-system and the other sub-system via at least one input and/or at least one output.

In some advantageous embodiments, variants, or refinements of embodiments, the virtual model is generated based on a plurality of Internet-of-Things (IoT) devices with accumulated data regarding the at least one sub-system.

In some advantageous embodiments, variants, or refinements of embodiments, the policy is established by at least one user associated with the verification.

The invention also provides, according to a second aspect, an apparatus configured to perform the method according to any embodiment of the first aspect of the present invention. The apparatus may in particular comprise an input interface, a computing device and an output interface.

The computing device may be realized in hardware, such as a circuit or a printed circuit board and/or comprising transistors, logic gates and other circuitry. Additionally, the computing device may be at least partially realized in terms of software. Accordingly, the computing device may comprise, or be operatively coupled to, a processor (one or more CPUs and/or one or more GPUs and/or one or more ASICs and/or one or more FPGAs), a working memory and a non-transitory memory storing a software or a firmware that is executed by the processor to perform the functions of the computing device. Signals may be received by the input interface and signals that the processor of the computing device creates may be outputted by the output interface. The computing device may be implemented, at least partially, as a microcontroller, an ASIC, an FPGA and so on.

The invention further provides, according to a third aspect, a non-transitory computer-readable data storage medium comprising executable program code configured to, when executed by a computing device, perform the method according to any embodiment of the first aspect.

The invention also provides, according to a fourth aspect, a computer program product comprising executable program code configured to, when executed by a computing device, perform the method according to any embodiment of the first aspect.

The invention also provides, according to a fifth aspect, a data stream comprising, or configured to generate, executable program code configured to, when executed by a computing device, perform the method according to any embodiment of the first aspect.

### Brief description of the drawings

The invention will be explained in yet greater detail with reference to exemplary embodiments depicted in the drawings as appended.

The accompanying drawings are included to provide a further understanding of the present invention and are incorporated in and constitute a part of the specification. The drawings illustrate the embodiments of the present invention and together with the description serve to illustrate the principles of the invention. Other embodiments of the present invention and many of the intended advantages of the present invention will be readily appreciated as they become better understood by reference to the following detailed description. Like reference numerals designate corresponding similar parts.

The numbering of method steps is intended to facilitate understanding and should not be construed, unless explicitly stated otherwise, or implicitly clear, to mean that the designated steps have to be performed according to the numbering of their reference signs. In particular, several or even all of the method steps may be performed simultaneously, in an overlapping way or sequentially.
- Fig. 1: shows a schematic flow diagram illustrating a computer-implemented method according to the first aspect of the present invention;
- Fig. 2: shows a block diagram schematically illustrating a structure of a system according to the first aspect of the present invention;
- Fig. 3: shows a block diagram schematically illustrating an apparatus according to an embodiment of the second aspect of the present invention;
- Fig. 4: shows a block diagram schematically illustrating a computer program product according to an embodiment of the third aspect of the present invention; and
- Fig. 5: shows a block diagram schematically illustrating a data storage medium according to an embodiment of the fourth aspect of the present invention.

### Detailed Description of the Invention

Although specific embodiments have been illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

The term "digital twin" is a digital replica of a living or non-living physical entity. Digital twin refers to a digital replica of potential and actual physical assets (physical twin), processes, people, places, systems and devices.

The term "functional requirement" is a function of a system or its component (sub-system), where a function is described as a specification of behavior between outputs and inputs. Functional requirements may involve calculations, technical details, data manipulation and processing, and other specific functionality that define what a system is supposed to accomplish.

The term "non-functional requirement" is a requirement that specifies criteria that can be used to judge the operation of a system, rather than specific behaviors. Non-functional requirements may be defined as quantitative requirements.

Broadly, functional requirements define what a system is supposed to do and non-functional requirements define how a system is supposed to be. Functional requirements are usually in the form of "system shall do <requirement>", an individual action or part of the system, perhaps explicitly in the sense of a mathematical function, a black box description input, output, process and control functional model or input-output (IPO) Model. In contrast, non-functional requirements may be defined as quantitative requirements. That is, non-functional requirements are in the form of "system shall be <requirement>", an overall property of the system as a whole or of a particular aspect and not a specific function. The system's overall properties commonly mark the difference between whether the development project has succeeded or failed.

The term "RAMS" is an acronym for "Reliability, Availability, Maintainability, and Safety", commonly used in engineering to characterize a product or system. Reliability means ability to perform a specific function and may be given as design reliability or operational reliability. Availability means ability to keep a functioning state in the given environment. Maintainability means ability to be timely and easily maintained (including servicing, inspection and check, repair and/or modification). Safety means ability not to harm people, the environment, or any assets during a whole life cycle.

The term "fault tree analysis (FTA)" is a top-down, deductive failure analysis in which an undesired state of a system is analyzed using Boolean logic to combine a series of lower-level events. This analysis method is mainly used in safety engineering and reliability engineering to understand how systems can fail, to identify the best ways to reduce risk and to determine (or get a feeling for) event rates of a safety accident or a particular system level (functional) failure.

The term "failure modes and effects analysis (FMEA)", which is often written with "failure modes" in plural, is the process of reviewing as many components, assemblies, and subsystems as possible to identify potential failure modes in a system and their causes and effects. For each component, the failure modes and their resulting effects on the rest of the system are recorded in a specific FMEA worksheet. There are numerous variations of such worksheets. An FMEA can be a qualitative analysis, but may be put on a quantitative basis when mathematical failure rate models are combined with a statistical failure mode ratio database. There exist a few extensions of FMEA, for example, FMEDA and FMECA. FMEDA (failure modes, effects, and diagnostic analysis) is a systematic analysis technique to obtain subsystem / product level failure rates, failure modes and diagnostic capability. FMECA (failure mode, effects and criticality analysis) extends FMEA by including a criticality analysis, which is used to chart the probability of failure modes against the severity of their consequences.

The term "blockchain", originally block chain, is a growing list of records (called blocks) that are linked by using cryptography. Each block contains a cryptographic hash of the previous block, a timestamp, and transaction data. By design, a blockchain is resistant to modification of the data. It is "an open, distributed ledger that can record transactions between two parties efficiently and in a verifiable and permanent way".

The term "smart contract" refers to digital entities that define complex transaction logic and facilitate cross-organizational workflow including, but not limited to, storage of data, data access permissions, ordered workflow and computation. Digital entities may define complex transaction logic and facilitate cross-organizational workflow including, but not limited to, storage of data, data access permissions, ordered workflow and computation. In the cryptocurrency space, smart contracts are digitally signed in the same way a cryptocurrency transaction is signed. Additionally, the programming languages with various degrees of Turing-completeness as a built-in feature of a blockchain make the creation of custom sophisticated logic possible.

The term "digital signature" is a mathematical scheme for verifying the authenticity of digital messages or documents. A valid digital signature, where the prerequisites are satisfied, gives a recipient very strong reason to believe that the message was created by a known sender (authentication), and that the message was not altered in transit (integrity). The signing keys are held in a crypto wallet.

The term "security protocol" (cryptographic protocol or encryption protocol) is an abstract or concrete protocol that performs a security-related function and applies cryptographic methods, often as sequences of cryptographic primitives. A protocol describes how the algorithms should be used. A sufficiently detailed protocol includes details about data structures and representations, at which point it can be used to implement multiple, interoperable versions of a program.

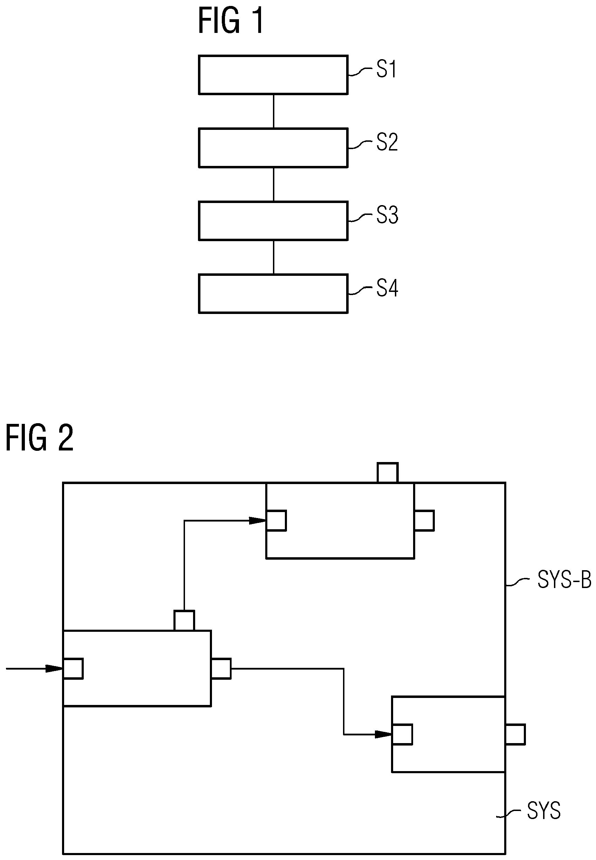

Fig. 1 shows a schematic flow diagram illustrating a computer-implemented method according to the first aspect of the present invention, i.e. a computer-implemented method for protecting confidential data during system verification. The procedures described in Fig. 1 may be controlled by software, an apparatus, a computer program product or a non-transitory computer-readable data storage medium. The software may be partially published or published to all users involved in the system verification. Possibly further types of software disclosure may also be valuable.

In step S1, a virtual model for at least one of multiple sub-systems included in a system may be generated to verify an operation of the system.

The sub-system may be a component which forms the system. The system may be also referred to as a whole system, technical system, a system to be engineered (or verified), or investigated system. The sub-system may be a software component or a hardware component. The sub-system may be also referred to as a component, or one assembly of the whole system.

The supplier of the sub-system may not want to disclose at least one of an inner structure, a functionality or a failure property of their own sub-system, which is confidential information, to other users involved in the verification of the system. For example, the users may include a system owner, suppliers of sub-systems, a RAMS engineer, an assessor of the verification, etc.

Furthermore, different sub-systems included in the whole system may be supplied by different suppliers. Thus, in a system, multiple sub-systems manufactured by different supplier may be linked to each other. To evaluate the performance of the whole system, interaction between the sub-systems needs to be implemented. However, each of the suppliers may not want to disclose the confidential data of their own sub-system.

The sub-system may be configured with at least one input (port) and at least one output (port). The different sub-systems may be connected via their inputs and outputs. For example, a first sub-system, a second sub-system, and a third sub-system may be included in the system to be engineered. An input of the first sub-system is an input of the whole system, an output of the first sub-system is connected to an input of the second sub-system, an output of the second sub-system is connected to an input of the third sub-system, and an output third sub-system is an output of the whole system. The operation of the system may be performed based on interactions between the at least one sub-system and the other sub-system via at least one input and/or at least one output.

Each sub-system is configured with its own characteristic. For example, each of the sub-systems has its own relationship between inputs and outputs. Thus, an operation of a sub-system may be defined by the relationship between inputs and outputs. The relationship between inputs and outputs may be also referred to as 'functional description'.

The virtual model may be built based on a digital twin of at least one sub-system. Thus, the performance of the at least one sub-system may be verified by a virtual model of the corresponding sub-system(s) .

The virtual model may be generated based on a plurality of sensors with accumulated data regarding the at least one sub-system. In more detail, the virtual model may be generated based on data acquired by Internet of things (IoT) devices associated with corresponding sub-system. The IoT devices may identify each other, and collect data from the identified IoT devices. Furthermore, the virtual model may be generated automatically by using the IoT devices.

The virtual model may be implemented by at least one of a Unified Modeling Language (UML), a Systems Modeling Language (SysML), or any other modelling language. The Unified Modeling
Language (UML) is a general-purpose, developmental, modeling language in the field of software engineering that is intended to provide a standard way to visualize/describe the design of a system. SysML is a general-purpose modeling language for systems engineering applications. SysML supports the specification, analysis, design, verification and validation of a broad range of systems and systems-of-systems.

The verification may be a process for evaluating performance of at least one sub-system, several sub-systems or the whole system.

The verification of operation may be performed in terms of at least one functional requirement or a non-functional requirement. That is, the verification may be to determine whether functional requirements and/or non-functional requirements of the at least one sub-system is reached for the operation of the system. Definitions of functional requirements and non-functional requirements are already introduced above. For example, a non-functional (quantitative) requirement may be verified by RAMS analysis..

The verification may be performed based on at least one of a Fault Tree Analysis (FTA), a Failure Mode and Effects Analysis (FMEA), a Failure Modes, Effects, and Diagnostic Analysis (FMEDA) and a Failure Mode, Effects and Criticality Analysis (FMECA). According to an embodiment of the present disclosure, a target requirement for verification of the sub-system may be represented by a maximum number for the risk priority number of FMEA's.

In step S2, a policy for disclosure of data related to the verification may be acquired. The policy may define a range of data for the sub-system to be disclosed to at least one user associated with the verification.

Prior to processing all users that contribute sub-systems as well as the system owner acknowledge the functional evaluation and the functional requirements used as well as the RAMS calculation for this specific system setup and the RAMS criteria specified. These acknowledgements are important to avoid unauthorized investigation of e.g. competitor components without consent or notice of the parties involved.

The policy may be input by the users involved in the verification, or may be automatically generated based on the acknowledgment from all users involved in the verification.

The policy may be established by at least one of the users associated with the verification. The user may be a person who is involved in the process of engineering and verification. For example, the user may be a system engineer, a RAMS engineer, and assessor of the system. The system engineer may be a developer of the system or each of sub-systems. The RAMS engineer may be an engineer who analyses/verifies whether RAMS requirements for the system are satisfied. The assessor may be an expert who analyses errors and fault of the whole system based on results of the verification.

The policy may be decided by an engineer of corresponding sub-system (supplier of the sub-system) alone, unanimity of all parties involved in the verification, or majority vote.

The users may select the policy for disclosure of data related to the verification. The policy may define the range of data to be disclosed as information of whether a target requirement is met or not during the verification. The policy may define whether the range of data includes information about a failure property of the at least one sub-system for the non-functional requirements. The failure property may include at least one information about which property is failed, and specific data of failure (for example, 98% target availability or a target failure rate of 0.0001 failures per year). The policy may include information (for example, identity, ID) for identifying users who are authorized for access to the defined range of data.

For example, the user may select between "functional/RAMS target reached (yes/no)" which represents only whether the requirement is met or not, and "Detailed functional/RAMS analyses" which discloses further data related to the verification. If "functional/RAMS target reached (yes/no)" is selected by the users, then information on whether the requirement is met may be disclosed. The information may be provided in a form of yes or no. If "Detailed functional/RAMS analyses" is selected by the users, then further information may be disclosed.

For example, in case that "Detailed functional/RAMS analyses" is selected, regarding non-functional requirement (e.g., RAMS sensitivity) analyses different processing options such as "no sensitivity analyses", "sensitivity analysis results only to the system owner", "sensitivity analysis results only to the component supplier" or "sensitivity results to all parties" etc. shall be proposed and need to be acknowledged by all parties. Failure mode names may be anonymized (generic IDs) depending on the options chosen. Sensitivity analyses are only conducted upon consent of all involved parties to the corresponding option. Sensitivity analysis options may also comprise "ranking only" or "ranking of most sensitive item per subsystem".

In step S3, result data of the verification for the sub-system may be configured based on the defined range of data. The result data may be configured differently per user associated with the verification. Thus, the output data is only disclosed to corresponding users.

In step S4, the virtual model may be adjusted in accordance with the policy to only disclose the configured result data in a cryptographic environment during the verification. The cryptographic environment may be referred to as an encrypted condition during the verification.

The virtual model may be encrypted to conceal at least one of an inner structure, a functionality, and a failure property of corresponding sub-system. The virtual model may be encrypted by security protocol (cryptographic protocol or encryption protocol) . The encrypted virtual model may be configured to only disclose result data regarding verification only to authorized users. In this description, the encrypted virtual model may be a virtual model in the cryptographic environment.

According to an embodiment, the virtual model may be encrypted by a smart contract which is based on blockchain technology. The smart contract is a computer program or a transaction protocol which is intended to automatically execute, control or document legally relevant events and actions according to the terms of a contract or an agreement. The contract or the agreement may be generated based on the policy.

The result data is only disclosed to corresponding users. The corresponding users may be authenticated based on at least one of a public key and a private key. In other word, the output data may be disclosed to corresponding users with a presence of at least one of a public key and a private key.

In more detail, the virtual model may provide the range of data indicated by the policy based on digital signature. More specifically, there may be two techniques for encrypting information: symmetric encryption (also called secret key encryption) and asymmetric encryption (also called public key encryption). In case of symmetric encryption, one key ("shared secret") is used both for encryption and decryption, where in case of asymmetric encryption, the encryption is performed using a public key and decryption is performed using the private key. PGP combines symmetric key encryption and public -key encryption. The message is encrypted using a symmetric encryption algorithm, which requires a symmetric key. Each symmetric key is used only once and is also called a session key. The message and its session key are sent to the receiver. The session key must be sent to the receiver so they know how to decrypt the message, but to protect it during transmission, it is encrypted with the receiver's public key.

The encrypted virtual model may determine system output states by excluding failure mode states. The software (e.g. encrypted virtual model) either yields the calculated output states or compares the results with the requirements. and outputs "Functional target reached (yes/no)". In a specific embodiment intermediate calculation results may only be stored temporarily but not stored permanently in the blockchain to ensure confidentiality.

The encrypted virtual model may determine the RAMS model, e.g. the fault tree and/or the FMEA list. In a specific embodiment intermediate calculation results may only be stored temporarily but not stored permanently in the blockchain to ensure confidentiality.

The encrypted virtual model may calculate RAMS analysis data of the fault tree such as failure rate, reliability, availability, sensitivity analysis etc.. In a specific embodiment intermediate calculation results may only be stored temporarily but not stored permanently in the blockchain to ensure confidentiality.

The encrypted virtual model may return the limited analysis data for the system to be engineered. In its simplest form this will be: "RAMS target reached - yes" or "RAMS target reached - no". The results can be verified at a dedicated milestone by any involved party or by specific parties such as for instance the system owner or Notified Bodies . A typical procedure would be that the system owner initiates improvement cycles as long as the RAMS target is not reached. Once the RAMS target is achieved the customer will be included and can verify the results on his own. The RAMS evaluation can also be executed without functional verification.

Depending on the options, an access-controlled blockchain may be implemented.

Supposing sufficiently standardized boundary conditions and components or sub systems involved the present disclosure also applies to Component Fault Trees (P. Liggesmeyer and M. Rothfelder, "Improving System Reliability with Automatic Fault Tree Generation," in Proceedings of the 28th Annual International Symposium on Fault-Tolerant Computing, 1998.). In this case only a subset of the steps described above and some modification will be required to account for the input/output failure modes in Component Fault Trees.

According to embodiments of the present disclosure, it may be possible to verify functionality and to conduct quantitative analyses for the systems engineered such as for instance FTA, FMEA, FMEDA or FMECA without disclosing the inner structure, functionality or failure properties of the sub systems or components composing a system.

Effort, cost and time-delay for legal considerations and agreements, third party evaluation and communication are spared. The typical risks involved in including a third party such as unwanted knowledge transfer can be totally avoided since a third party is no longer required. The role of the trustworthy third party is implemented by means of realizing the algorithm by means of cryptographic methods such as blockchain and smart contract.

Efforts and risks regarding the obfuscation method for the component's or sub system's inner structure can also be avoided completely.

Quantitative analyses (e.g. fault tree analyses, FMEA analyses, FMEDA analyses or FMECA analyses) can be conducted without having to resort to model simplification which yields more precise results sparing additional mitigation measures, unnecessary communication and delay. Depending on the chosen options main drivers for system non-conformance can be directly attributed to the underlying causes which may be impossible in case of model simplification. Errors due to human judgment can be avoided.

Fig. 2 shows a block diagram schematically illustrating a structure of a system according to the first aspect of the present invention. As shown in Fig. 2, an example of system is provided, but the structure of system according to the present disclosure is not limited therein.

As can be seen in the diagram illustrated in Fig. 2 a system SYS can comprise several components C. The components C can comprise sub components such as switches, sensors or actuators, software components to be executed by hardware components such as CPUs and embedded components comprising both hardware and embedded software to run the respective hardware component. Each component C can comprise input ports and output ports for connecting the respective component with other components of the defined and investigated system. In the illustrated exemplary system of Fig. 2, the system comprises three components C1, C2, C3. The system SYS comprises a system boundary SYS-B which comprises the interface ports of the system to other systems. In the illustrated example of Fig. 2 the first component C1 comprises an input port to receive a signal and two output ports which are connected to other components C2, C3 of the investigated system SYS. The second component C2 comprises a single input port connected to the first output port of the first component C1. The second component C2 comprises a single output port which forms an external port or interface at the system boundary SYS-B of the system. The third component C3 also comprises a single input port and a single output port. The single input port of the component C3 is connected internally to the second output port of the first component C1 as shown in Fig. 2. The output port of the third component C3 forms an external port or interface at the system boundary SYS-B of the investigated system SYS. As can be seen in Fig. 2 the system boundary SYS-B comprises in the illustrated embodiment three ports, i.e. the input port of the first component C1, the output port of the second component C2 and the output port of the third component C3. The components C within the system SYS can comprise different kinds of components C including hardware components, software components to be executed by hardware components such as CPUs and embedded components. The hardware components can comprise all analogue or digital components.

The components C, C2, C3 each have an associated machine readable functional description including the port definitions as well as component failure mode descriptions which are processed to generate automatically an analytical artifact used for development and/or analysis of the investigated technical system of interest SYS in response to at least one applied system evaluation criterion. These analytical artifacts comprise in a possible embodiment a fault tree, a Markov chain, a combination of fault tree(s) and Markov chain(s), an FMEA table, or an FMECA table, an FMEDA table. These artifacts are generated automatically on the basis of a full functional description of the system of interest SYS including a machine readable description of the failure modes of its components or sub systems. Further, the analytical artifacts can be generated for different kinds of evaluation criteria such as for instance safety, reliability, maintainability and/or availability criteria.

The different components C such as components C1, C2, C3 of the system SYS illustrated in Fig. 2 can be supplied by different suppliers which offer their technical components or sub systems with a standardized generic functional description which is machine readable. It is also possible to use a semiformal functional description with OMG SysML or AADL or EAST-ADL. The functional description does include input and output port definitions and additional information data about failure modes, their causes and corresponding failure properties, in particular failure rates, preventive and corrective maintenance activities and test-related data. In a possible embodiment each component C comprises an associated functional description. This functional description of the component C can comprise the port definitions of the input and output ports of the respective component C, all component failure modes of the component, at least one internal state of the respective component, a failure rate, maintenance activities, an inspection interval and/or a mean down time and/or a mean repair time of the component.

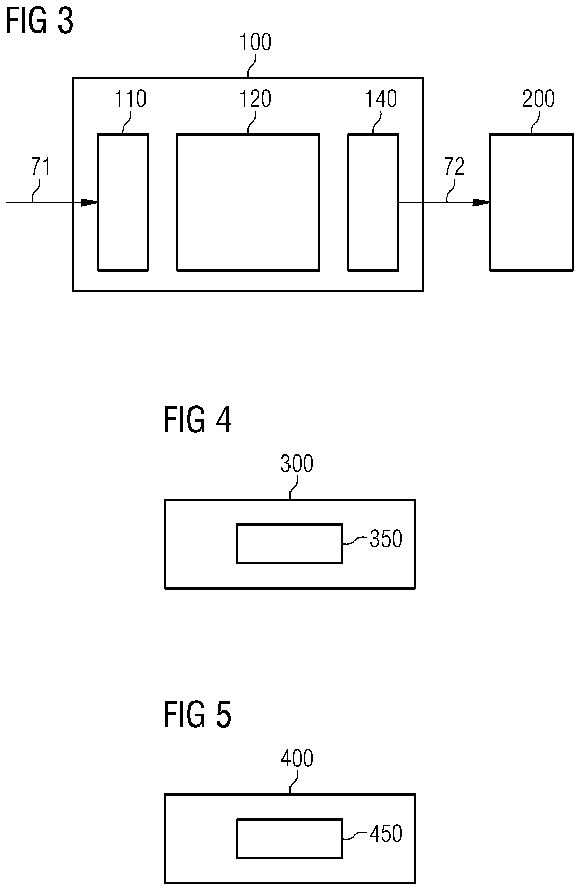

Fig. 3 shows an apparatus 100 according to an embodiment of the second aspect of the present invention, i.e. an apparatus for protecting confidential data in a verification of a system with a cryptographic method. In particular, the apparatus 100 is configured to perform the method according to any embodiment of the first aspect of the present invention, in particular the method as described in the foregoing with respect to Fig. 1 and Fig. 2.

The apparatus 100 comprises an input interface 110 for receiving an input signal 71. The input interface 100 may be realized in hard- and/or software and may utilize wireless or wire-bound communication. For example, the input interface 110 may comprise an Ethernet adapter, an antenna, a glass fiber cable, a radio transceiver and/or the like.

The apparatus 100 further comprises a computing device 120 configured to perform the steps S1 through S4. The computing device 120 may in particular comprise one or more central processing units, CPUs, one or more graphics processing units, GPUs, one or more field-programmable gate arrays FPGAs, one or more application-specific integrated circuits, ASICs, and or the like for executing program code. The computing device 120 may also comprise a non-transitory data storage unit for storing program code and/or inputs and/or outputs as well as a working memory, e.g. RAM, and interfaces between its different components and modules.

The apparatus may further comprise an output interface 140 configured to output an output signal 72, for example as has been described with respect to step S2 in the foregoing. The output signal 72 may have the form of an electronic signal, as a control signal for a display device 200 for displaying the semantic relationship visually, as a control signal for an audio device for indicating the determined semantic relationship as audio and/or the like. Such a display device 200, audio device or any other output device may also be integrated into the apparatus 100 itself.

Fig. 4 shows a schematic block diagram illustrating a computer program product 300 according to the third aspect of the present invention, i.e. a computer program product 300 comprising executable program code 350 configured to, when executed (e.g. by the apparatus 100), perform the method according to the first aspect of the present invention, in particular the method as has been described with respect to Fig. 1 and Fig. 2 in the foregoing.

Fig. 5 shows a schematic block diagram illustrating non-transitory computer-readable data storage medium 400 according to the fourth aspect of the present invention, i.e. a data storage medium 400 comprising executable program code 450 configured to, when executed (e.g. by the apparatus 100), perform the method according to the first aspect of the present invention, in particular the method as has been described with respect to Fig. 1 and Fig. 2 in the foregoing.

In the foregoing detailed description, various features are grouped together in the examples with the purpose of streamlining the disclosure. It is to be understood that the above description is intended to be illustrative and not restrictive. It is intended to cover all alternatives, modifications and equivalence. Many other examples will be apparent to one skilled in the art upon reviewing the above specification, taking into account the various variations, modifications and options as described or suggested in the foregoing.

## Claims

1. A computer-implemented method for protecting confidential data in a verification of a system comprising at least the steps of:
generating (S1) a virtual model for at least one of multiple sub-systems included in the system to verify an operation of the system;
acquiring (S2) a policy for disclosure of data related to the verification, wherein the policy defines a range of data for the at least one subsystem to be disclosed to at least one user associated with the verification;
configuring (S3) result data of the verification for the at least one sub-system based on the defined range of data; and
adjusting (S4) the virtual model in accordance with the policy to only disclose the configured result data in an cryptographic environment during the verification.

2. The method of claim 1,
wherein the policy includes an identification of at least one user authorized for access to the defined range of data.

3. The method of claim 1 or claim 2,
wherein the result data is configured differently per user associated with the verification.

4. The method of claim 1 to claim 3,
wherein the result data are disclosed to at least one authorized user with a presence of at least one of a public key and a private key.

5. The method of any of claims 1 to 4,
wherein the virtual model is encrypted based on a smart contract by using a blockchain technology.

6. The method of any of claims 1 to 5,
wherein the encrypted condition conceals at least one of an inner structure, a functionality, and a failure property of the at least one sub-system.

7. The method of any of claims 1 to 6,
wherein the verification is to determine whether fulfillment of functional requirements and/or non-functional requirements of the at least one sub-system is reached for the operation of the system.

8. The method of any of claims 1 to 7,
wherein the result data of the verification indicates whether a target requirement is met or not.

9. The method of claim 7,
wherein the policy defines whether the range of data includes information about a failure property of the at least one sub-system for the non-functional requirements.

10. The method of any of claims 1 to 9,
wherein the at least one sub-system is connected to another sub-system comprising the system via at least one input and/or at least one output, and
wherein the operation of the system is performed based on interactions between the at least one sub-system and the other sub-system via at least one input and/or at least one output.

11. The method of any of claims 1 to 10,
wherein the virtual model is generated based on a plurality of Internet-of-Things (IoT) devices with accumulated data regarding the at least one sub-system.

12. The method of any of claims 1 to 11,
wherein the policy is established by at least one user associated with the verification.

13. An apparatus (100) configured to perform the method according to any of claims 1 to 12.

14. A computer program product (300) comprising executable program (350) code configured to, when executed, perform the method according to any of claims 1 to 12.

15. A non-transitory computer-readable data storage medium (400) comprising executable program code (450) configured to, when executed, perform the method according to any of claims 1 to 12.
